# EUROPEAN PATENT APPLICATION

(11) **EP 2 863 524 A1**
(43) Date of publication of application: **22.04.2015**
(21) Application number: 13188686.3
(22) Date of filing: 15.10.2013
(51) Int. Cl.: H02K 21/24, H02K 3/26, H02K 9/20

(54) **Stator for an axial flux machine and method for cooling a stator of an axial flux machine**

(71) Applicant: ABB Oy, 00380 Helsinki (FI)
(72) Inventor: Ikäheimo, Jouni, 65320 Vaasa (FI)
(74) Representative: Kolster Oy Ab

(57) **Abstract**

The present disclosure presents a stator for an axial flux machine. The stator is constructed from a printed circuit board (PCB) and a method for cooling such a stator. The printed circuit board of the stator comprises at least one electrically conducting trace forming a stator winding and at least one cooling channel formed in at least one electrically isolating substrate layer of the printed circuit board for carrying a mixture of pressurized air and mist of a cooling liquid. The channel is arranged such that the mixture is physically in contact with the trace along at least a part of the length of the trace in order to cool the trace.

## Description

### FIELD OF THE INVENTION

The present invention relates to axial flux machines, and particularly to cooling of stator windings of axial flux machines.

### BACKGROUND INFORMATION

Recently, many new types of axial flux permanent magnet machines have appeared on the market. The stator may be ironless and/or implemented with a printed circuit board (PCB). A PCB stator may provide a cost-efficient way to implement an axial flux machine.

Cooling of an axial flux machine may be an important issue. Permanent magnets, for example, may not be able to tolerate high temperatures. Especially in high-power axial flux machines, stator windings may be a major heat source due to conduction losses in the windings. The windings may have to be coupled with efficient cooling.

Stators may be cooled by conducting heat to the frame of the machine or by convective cooling, such as air cooling or liquid cooling. An efficient cooling, such as liquid cooling, requires a cooling arrangement, which may significantly add the costs of the system.

### BRIEF DISCLOSURE

An object of the present invention is to provide a method and an apparatus for implementing the method so as to alleviate the above disadvantages. The objects of the invention are achieved by a method and an apparatus which are characterized by what is stated in the independent claims. The preferred embodiments of the invention are disclosed in the dependent claims.

Windings of a PCB-based stator for an axial flux machine can effectively be cooled by forming cooling channels within the PCB of the stator. The cooling channels can be arranged to run on the substrate layer/layers of the PCB.

As a channel formed into a substrate layer may be too thin to be able to carry a flow of a cooling liquid, a phase transition cooling may be used in the PCB. A mixture of pressurized air and a mist of an electrically non-conducting cooling liquid may fed to the channels which may be placed such that the mixture running in the channels is in contact with the windings. The boiling point of the cooling liquid in the mixture may be selected such that the liquid evaporates when in contact with heated windings. The evaporated cooling liquid may then be carried away from the windings by air flow. The evaporated cooling liquid may then be condensed back into its liquid form by using a condenser.

The channels within the layers of the PCB allow very high current densities to be used in the PCB stator while keeping the production costs low. Thus, the power density and cost-effectiveness of the machine utilizing the stator may be improved.

### BRIEF DESCRIPTION OF THE DRAWINGS

In the following the invention will be described in greater detail by means of preferred embodiments with reference to the attached drawings, in which
Figures 1a and 1b illustrate simplified single-sided segmented pole axial flux machines having printed circuit board (PCB) stators;
Figures 2a to 2g illustrate simplified examples of different PCB layer stacking configurations; and
Figure 3 illustrates an exemplary arrangement utilising the disclosed stator structure.

### DETAILED DISCLOSURE

The present disclosure presents a method for cooling a stator of an axial flux machine, where the stator is constructed from a printed circuit board (PCB).

The stator PCB may be a laminated structure of trace layers and substrate layers. In the context of the present disclosure, a trace layer, i.e. a routing layer, is a layer of an electrically conducting material, such as copper. A substrate layer is a layer formed of an electrically non-conducting material. The substrate layer isolates the trace layers from each other and provides support for the PCB structure. There are several standard PCB substrate materials, such as FR4. The PCB may comprise a plurality of both trace layers and substrate layers. On its trace layer or layers, the stator PCB comprises an electrically conducting trace or traces forming a stator winding or windings.

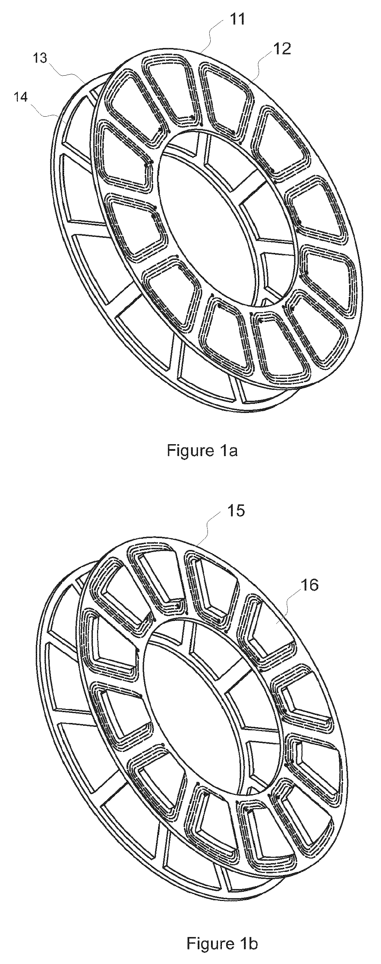

Figures 1a and 1b illustrate simplified single-sided segmented pole axial flux machines having printed circuit board (PCB) stators.

In Figure 1a, a stator PCB 11 comprises a plurality of windings 12, and a rotor 13 comprises permanent magnets 14.

Each winding 12 on the PCB 11 is constituted by a trace forming a coil in the plane of a trace layer of the PCB 11. In Figure 1, each winding 12 is formed on a single trace layer of the PCB 11. If the PCB has more than one trace layer, the traces of different windings may be placed on different trace layers. Traces of a winding 12 may also extend to more than one trace layer. Traces forming a winding in one trace layer may continue the winding on another trace layer.

Figure 1b illustrates an simplified axial flux machine that is otherwise similar, but the stator PCB 15 has stator poles 16. The PCB 15 of the stator has trapezoidal through-holes into which segmented stator poles may be fitted.

In order to efficiently cool the stator windings, the PCBs 11 or 15 may be provided with at least one cooling channel formed in at least one substrate layer of the printed circuit board. Substrate materials in the form of sheets or plates are available in a large variety of thicknesses. Therefore, a cooling channel formed in a substrate layer can have a large variety of heights. A height, like a thickness of the substrate material, refers here to the dimension in the direction extending perpendicular to the plane of the substrate layer. The height of the cooling channel may be in the range of 0.5 mm to 1 mm, for example. By using such a cooling channel or channels, a thin and efficiently cooled stator may be achieved.

As a cooling channel formed in a substrate layer of the PCB may be too narrow for a conventional cooling liquid to penetrate and flow in, a mixture of pressurized air and mist of a cooling liquid (e.g. 3M Fluorinert) may be supplied into the cooling channel. For example, a mixture with a ratio of 1:100 of cooling liquid and air, respectively, can flow even in a cooling channel having a thickness of a standard substrate layer. The supply of pressurized air causes an air flow which carries the mist through the cooling channel.

The channel may be arranged such that the mixture is physically in contact with the trace forming the winding along at least a part of the length of the trace. The boiling point of the cooling liquid may be chosen such that the mist of cooling liquid evaporates when in contact with the trace, if the temperature of the trace exceeds a set maximum. The mist vaporizes and absorbs latent heat in the stator PCB.

The vapour may then be carried away from the stator by the air flow and condensed back into liquid by a condenser. The condensed cooling liquid may then be reused in producing the mist of cooling liquid and supplying the mixture of air and mist into the channels.

Figures 1a and 1b represent only two examples of axial flux machine topologies into which the disclosed cooling method may be applied. The disclosed cooling method can be applied to different axial machine topologies where the stator is constituted by a PCB comprising stator windings. Further, the disclosed method is applicable to different combinations of layers in multilayer PCB configurations.

A stator for an axial flux machine may be produced, for example, by forming at least part of a stator winding onto at least one trace layer of a PCB and at least part of a cooling channel onto at least one substrate layer of the PCB. The conducting traces forming a winding may be on a copper-clad resin-impregnated laminate (prepreg), for example. A laminate refers here to a sheet of substrate material used in a PCB manufacturing process. These laminates form the substrate layers of the PCB. The copper cladding forms a trace layer on one or on both sides of the laminate. The traces may be etched onto a trace layer. In the etching process, the unwanted copper is removed, leaving only the desired copper traces.

Cooling channels maybe formed by milling or by punching to laminates without a copper cladding, for example. A cooling channel may run on more than one substrate layer, and/or the substrate layers may have different thicknesses. More than one cooling channel may be arranged for cooling different parts of a winding.

The laminates forming the trace and substrate layers may be combined into a stator PCB by laminating. Lamination may be performed by placing the stack of layers in a press and applying pressure and heat to the stack for a period of time. This results in an inseparable one-piece product. The resin in the resin-impregnated laminates seals the walls of the cooling channels, thus forming a substantially closed surface for the walls. The lamination process may be performed in multiple stages; new layers may be added to the PCB in sequence.

The layers of the PCB are arranged such that the combination of layers forms at least one cooling channel within the PCB for carrying the mixture of pressurized air and mist of an electrically non-conducting cooling liquid. In the cooling channel, the mixture is physically in contact with the trace along at least a part of the length of the trace in order to cool the trace. The disclosed cooling channels allow cooling of windings on a stator PCB, even if the windings are embedded into the inner layers of a multilayer PCB.

If a winding extends to more than one layer, the parts of the winding on different trace layers may be connected by using plated-through holes, i.e. vias. If stator poles are used, holes for them may be manufactured by milling, for example. A surface finish may also be applied to the stator PCB.

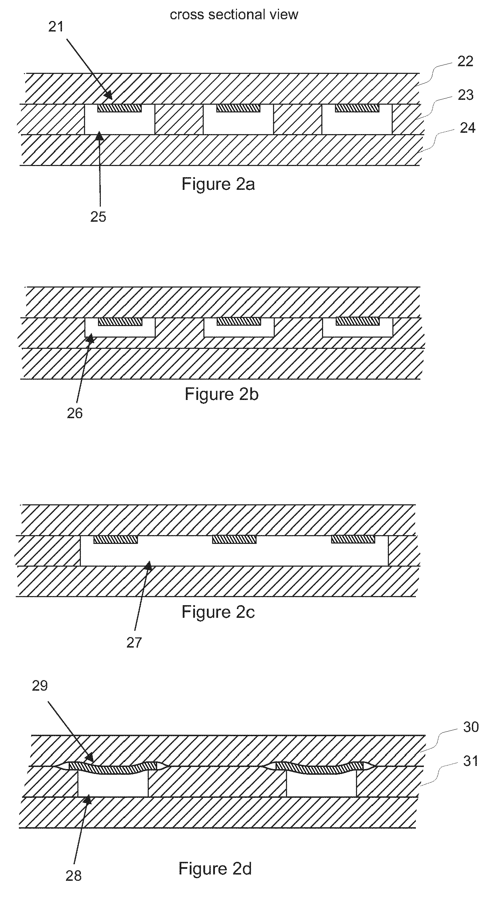

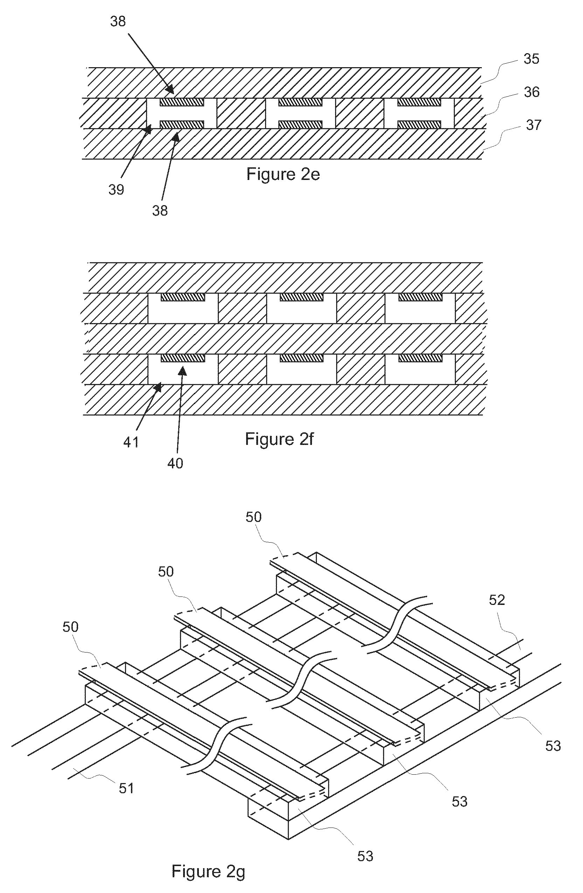

Figures 2a to 2g illustrate simplified examples of different PCB layer configurations. Figures 2a to 2f show cross-sectional views of different stacks of PCB layers where cooling channels run in the substrate layers. Figure 2g shows an isometric view of a PCB layer configuration.

In Figure 2a, traces 21 of a stator winding have been formed onto a copper layer of a copper-clad first laminate 22. A second laminate 23 without copper cladding is stacked below the first laminate 22. A third laminate 24 is stacked below the second laminate in Figure 2a.

The second laminate 23 has elongated openings running in the plane of the second laminate and in parallel with the traces of the windings. The three laminates 22, 23, and 24 are arranged in such a way that when the stack of the three layers is laminated, the openings leave thin channelled air-spaces 25 in between the first layer 22 and the third layer 24. These air spaces 25 form cooling channels which allow a mixture of pressurized air and mist of an electrically non-conducting cooling liquid to be physically in contact with the trace along at least a part of the length of the trace.

In Figure 2a, the channels 25 reach through the second laminate. Alternatively, as shown in Figure 2b, cooling channels 26 may be formed by elongated recesses which extend into only a part of the thickness of the laminate. The height of a cooling channel may also extend into a plurality of adjacent substrate layers. For example, in reference to Figure 2a, the air channels may alternatively be formed in two or more second laminates 23 stacked on top of each other. In reference to Figure 2b, the air channels may alternatively reach through one or more second laminates and finally extend into a part of the thickness of one second laminate.

In Figures 2a and 2b, each cooling channel is arranged to cool one part of a winding. However, a single cooling channel 27 may also be arranged to cool more than one part of a winding, as shown in Figure 2c.

In Figures 2a to 2c, the widths of the traces, i.e. the dimension in the plane of the trace layer and in perpendicular to the direction of the flow of current in the trace, are smaller than the widths of the cooling channels. As shown in Figure 2d, the channels 28 may alternatively be formed narrower than the traces 29. When the width of a trace 29 is larger than the width of the connected cooling channel 28, edges of the trace 29 are secured between a substrate layer 30 above and a substrate layer 31 below the trace 29. This may ensure that the trace 29 does not become detached from the substrate layer 30 during the lamination process or during use of the axial flux machine.

The cooling channels do not have to run in parallel with the traces. A cooling effect can also be achieved by cooling channel or channels that cross a winding.

Traces of a stator winding in a stator PCB may extend to a plurality of trace layers. In Figure 2e, three laminates 35 to 37 are stacked together. Traces 38 of a winding are formed on the copper cladding of the topmost and bottommost laminate 35 and 37. Cooling channels 39 are formed in the middle laminate 36 in order to cool traces 38 on both sides of the cooling channels 39.

Alternatively, as shown in Figure 2f, traces 40 on each trace layer may have their own cooling channels 41.

Figure 2g shows an exemplary isometric view of traces 50 and cooling arrangements of a stator PCB. The PCB comprises a supply channel 51 and a discharge channel 52 formed in at least one electrically isolating substrate layer of the PCB, and a plurality of cooling channels 53 .

The supply channel 51, the cooling channels 53, and the discharge channel 52 are adapted for carrying a mixture of pressurized air and mist of a cooling liquid. The cooling channels 53 connect the supply channel 51 to the discharge channel 52. Each channel 53 is formed in at least one substrate layer of the printed circuit board and is arranged such that the mixture is physically in contact with a conducting trace 50 forming a stator winding for at least a part of the length of the trace 50 in order to cool the trace 50. The supply channel 51 distributes the mixture to the cooling channels 53, and the discharge channel 52 discharges the mixture from the cooling channels 53.

In Figure 2g, the supply channel 51 runs perpendicularly to the cooling channels 53. The trace layers have no copper where the parts of the supply, cooling, and discharge channel connect.

The stator PCB further comprises a supply inlet for supplying the mixture to the supply channel 51, and a discharge outlet for discharging the mixture from the discharge channel 52. From the discharge output, the evaporated mist may be lead to a condenser which condensates the evaporated mist into a liquid.

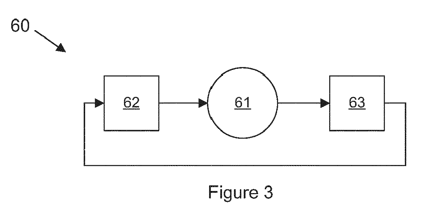

Figure 3illustrates an exemplary arrangement utilising the disclosed stator structure.

The arrangement 60 comprises an axial flux machine 61. The axial flux machine 61 comprises a stator which is constructed from a printed circuit board.

The printed circuit board comprises at least one electrically conducting trace forming a stator winding and at least one cooling channel formed in a substrate layer of the printed circuit board in order to carry a mixture of pressurized air and mist of a cooling liquid. The channel is arranged such that the mixture is physically in contact with the trace along at least a part of the length of the trace in order to cool the trace.

The PCB of the stator may be manufactured, for example, by using the above disclosed method for producing a stator PCB. Depending on the used stator topology, the PCB may be a multilayer PCB comprising a plurality of isolating substrate layers. The printed circuit board may also comprise openings into which stator poles are fitted.

The boiling point of the cooling liquid may be selected such that the cooling liquid evaporates when in contact with the trace, if the temperature of the trace exceeds a set maximum. Evaporating mist may cause the pressure in the channels to increase. The increased pressure forces the evaporated mist out of the channels. In order to avoid short circuits between, for example, windings of different phases of the stator, the cooling liquid may be electrically non-conducting. Alternatively, the windings of each phase may have cooling channels which are separate from each other. The arrangement further comprises means 62 for producing the mixture of pressurized air and mist of a cooling liquid and a condenser 63. The means 62 for producing the mixture may comprise, for example, a misting nozzle through which the cooling liquid is forced. The cooling liquid may be electrically non-conducting. The means 62 for producing the mixture are adapted to supply the mixture into the cooling channels.

Mist vaporized by the heat from the windings may then be carried away from the stator by the air flow generated by the pressurized air. The condenser 63 condenses the vapour back into liquid. The condensed cooling liquid may then be reused by the means 62 supplying the mixture of air and mist into the channels.

It will be obvious to a person skilled in the art that the inventive concept can be implemented in various ways. The invention and its embodiments are not limited to the examples described above but may vary within the scope of the claims.

## Claims

1. A stator for an axial flux machine, wherein the stator is constructed from a printed circuit board, wherein the printed circuit board comprises
at least one electrically conducting trace forming a stator winding,
at least one cooling channel formed in at least one electrically isolating substrate layer of the printed circuit board for carrying a mixture of pressurized air and mist of a cooling liquid, wherein the channel is arranged such that the mixture is physically in contact with the trace along at least a part of the length of the trace in order to cool the trace.

2. A stator as claimed in claim 1, wherein the isolating substrate layer is formed from a standard PCB process laminate material.

3. A stator as claimed in claim 1 or 2, wherein the height of the channel is in the range of 0.5 mm to 1 mm.

4. A stator as claimed in any one of the preceding claims, wherein the cooling channel is arranged to cool one part of a winding.

5. A stator as claimed in any one of the preceding claims, wherein the cooling channel is arranged to cool more than one part of a winding.

6. A stator as claimed in any one of the preceding claims, wherein the PCB is a multilayer PCB comprising a plurality of isolating substrate layers.

7. A stator as claimed in any one of the preceding claims, wherein the stator comprises
a plurality of the cooling channels
a supply channel formed in at least one substrate layer for distributing the mixture to the cooling channels,
a discharge channel formed in at least one substrate layer for discharging the mixture from the cooling channels,
a supply inlet for supplying the mixture to the supply channel,
a discharge outlet for discharging the mixture from the discharge channel.

8. An axial flux machine comprising the stator as claimed in any one of the preceding claims.

9. An arrangement comprising
the axial flux machine as claimed in claim 8,
means for producing a mixture of pressurized air and mist of an electrically non-conducting cooling liquid, where the means for producing the mixture are adapted to supply the mixture into the cooling channels,
a condenser adapted to condense mist vaporized by the heat from the windings.

10. An arrangement as claimed in claim 9, wherein the boiling point of the cooling liquid is such that the cooling liquid evaporates when in contact with the trace, if the temperature of the trace exceeds a set maximum.

11. A method for producing a stator for an axial flux machine, wherein the method comprises
forming at least part of a stator winding onto at least one trace layer of a PCB,
forming at least part of a cooling channel onto at least one substrate layer of the PCB,
combining the layers into the PCB, wherein the layers are arranged such that the combination of layers forms at least one cooling channel within the printed circuit board for carrying a mixture of pressurized air and mist of an electrically non-conducting cooling liquid, wherein the channel is arranged such that the mixture is physically in contact with the trace along at least a part of the length of the trace in order to cool the trace.

12. A method for cooling a stator of an axial flux machine, the stator being constructed from a printed circuit board comprising at least one electrically conducting trace forming a part of a stator winding, and wherein the method comprises
supplying a mixture of pressurized air and mist of a cooling liquid into at least one cooling channel formed in at least one substrate layer of the printed circuit board, wherein the channel has been arranged such that the mixture is physically in contact with the trace along at least a part of the length of the trace in order to cool the trace.

13. A method as claimed in claim 12, wherein the boiling point of the cooling liquid is such that the cooling liquid evaporates when in contact with the trace, if the temperature of the trace exceeds a set maximum, and wherein the method comprises
condensing the vapour carried away from the stator by the air flow back into liquid by using a condenser, and
reusing the condensed cooling liquid in producing the mist of cooling liquid and supplying the mixture of air and mist into the channels.
